# EUROPEAN PATENT APPLICATION

(11) **EP 0 860 993 A2**
(43) Date of publication of application: **26.08.1998**
(21) Application number: 98102698.2
(22) Date of filing: 17.02.1998
(51) Int. Cl.: H04N 5/45

(54) **A television receiver for multipicture display**

(30) Priority: 20.02.1997 JP 35861/97
(71) Applicant: MATSUSHITA ELECTRIC INDUSTRIAL CO., LTD., Kadoma-shi, Osaka 571 (JP)
(72) Inventor: Okumura, Naoji, Minou-shi, Osaka 562 (JP); Ishigami, Haruko, Hirakata-shi, Osaka 573 (JP)
(74) Representative: Kügele, Bernhard

(57) **Abstract**

A television receiver for multipicture display includes means for arbitrary and independently setting or selecting writing and reading positions of storing means to store a child picture in the storing means at every frame or at every one of a pair of fields and as a result, a field memory can be used with a better efficiency because only one of pair of fields is written.

## Description

### BACKGROUND OF THE INVENTION

### (1) Field of the invention

The present invention relates to a display control of a sub- picture in a television receiver having a multipicture display function displaying a plurality of pictures simultaneously on a screen.

### (2) Description of the Prior Art

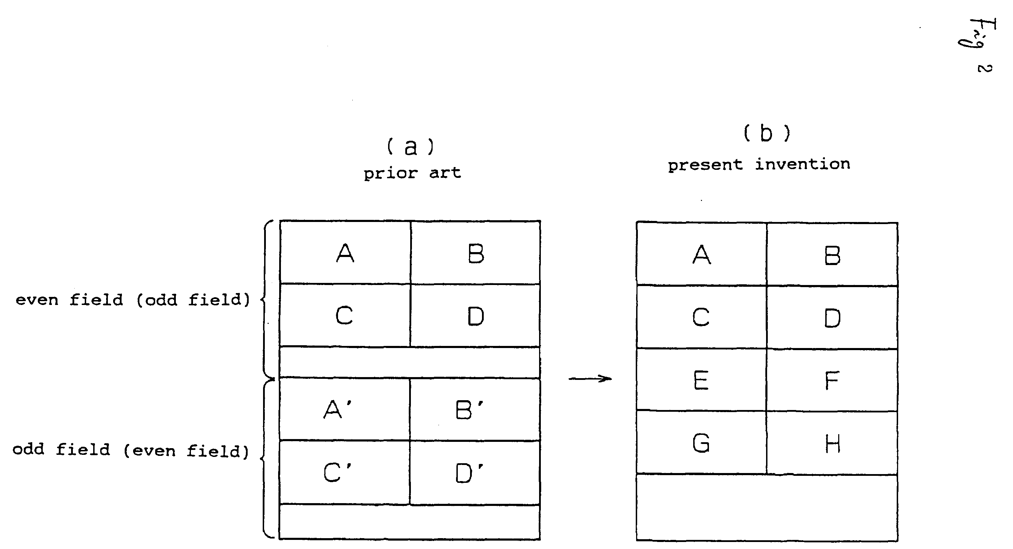

A usual control method of a field memory used for a sub- picture display in a multipicture display television receiver is to write a sub- picture signal to be displayed in a field memory, then read the written picture signal in the written order and transmit it to a picture signal processing circuit in a post stage, as being disclosed, for example in Japanese Patent Publication No.7-59059. In the field memory, a picture signal at every frame (that is, a pair of fields composed of an odd field and an even field) is written and a position where an odd field picture signal is written and a position where an even field picture signal is written are separated, as shown in FIG. 2(a). When only one field of a pair of fields (an odd field or an even field) is displayed, a picture signal of a pair of fields (A, A', B, B', C, C', D and D' (A, B, C and D: signal of odd field or even field and A', B', C' and D': signal of even field or odd field) is written in a memory at every frame as shown in FIG. 2(a) and only a signal of one field A, B,C and D or A', B', C' and D' written in the field memory is read in order and a picture of the field is displayed in order.

Thus, in a control of a field memory for a sub- picture display in a multipicture television receiver, a picture signal is written in a field memory at every frame (odd and even fields) even when a picture is displayed using only one field and only a half of the used memory capacity is utilized.

Therefore, there is a problem that only a picture signal of one field can not written in the whole area of a field memory even when a picture signal time shared at every field is wanted to be written in a memory with as many fields as possible, like that a strobe picture is displayed by writing a picture signal time shared at a fixed interval in a field memory and reading the picture signal written in the field memory at the fixed interval.

In the prior art, there is another problem that picture signals of a plurality of programs can not be read at the same time, even when the plurality of programs is written in the same field memory through a tuner to select and receive a picture signal, because a picture signal written in a field memory is read at a written unit.

Because the picture signal written in a field memory is read in the written order, the picture signal written in the field memory can not be read in reverse order in time.

### SUMMARY OF THE INVENTION

The present invention is related to a television receiver including:
receiving means for selecting and receiving a sub- picture signal;
signal compression means for compressing the sub- picture signal;
storing means for storing the compressed picture signal output from the data compression means, designating a writing position and a reading position;
writing control means for designating a reading position of the compressed picture signal read from the storing means; and
synthesis means for synthesizing the compressed picture signal read from the storing means and a main picture signal.

A television receiver for multipicture display in accordance with a first invention includes:
means for arbitrarily and independently setting or selecting a writing position and a reading position of storing means to store a sub- picture signal; and
means for selecting writing a picture signal to store in the storing means at every frame or at every one of a pair of fields.

A picture signal can be written in the whole area of the field memory at every frame when a frame picture is displayed on a screen and at every one of a pair of fields when only one field is displayed, because it is possible to select writing a signal for a sub- picture in a field memory at every frame or at every one of a pair of fields.

In accordance with a second invention, a television receiver for multipicture display includes:
receiving means for selecting and receiving a sub- picture signal;
signal compression means for compressing the sub- picture signal;
storing means for storing the compressed signal output from the storing means, designating a writing position and a reading position;
writing control means for designating a writing position of the compressed picture signal to the storing means;
reading control means for designating a reading position of the compressed picture signal read from the storing means; and
synthesis means for synthesizing the compressed picture signal read from the storing means and a main picture signal.

A picture signal can be written in the whole area of the field memory at every frame when a frame picture is displayed on a screen and at every one of a pair of fields when only one field is displayed, because it is possible to designate a writing position and a reading position of a picture signal to the storing means.

In accordance with a third invention, a television receiver for multipicture display selects and receives sub- picture signals of a plurality of programs in order, compresses the signals in a vertical or horizontal direction, stores in adjacent positions in storing means, designates a reading position of the storing means for the plurality of programs and simultaneously reads the plurality of picture signals and simultaneously displays the plurality of programs written in a field memory as sub- pictures by a strobe display or a moving picture display.

In accordance with a fourth invention, a television receiver for multipicture display includes:
receiving means for selecting and receiving sub- picture signals of a plurality of programs;
signal compression means for compressing the sub- picture signals received at the receiving means;
storing means for storing the compressed picture signal output from the signal compression means, designating a writing position and a reading position;
writing control means for designating a writing position of the compressed picture signal to the storing means;
reading control means for designating a reading position of the compressed picture signal read from the storing means; and
synthesis means for synthesizing the compressed picture signal read from the storing means and a main picture signal;
   wherein the storing means stores the compressed signal of a plurality of sub- pictures, designating adjacent positions and the pictures signals of the plurality of adjacent programs are simultaneously read and are displayed in adjacent positions as sub- pictures.

A plurality of programs can simultaneously be displayed by a strobe display or a moving picture display.

In accordance with a fifth invention, a television receiver for multipicture display includes:
receiving means for selecting and receiving a sub- picture signal;
signal compression means for compressing the sub- picture signal;
storing means for storing the compressed picture signal output from the signal compression means, designating a writing position and a reading position;
writing control means for designating a writing position of the compressed picture signal to the storing means;
reading control means for designating a reading position of the compressed picture signal read from the storing means; and
synthesis means for synthesizing the compressed picture signal read from the storing means and a main picture signal;
   wherein the reading control means can change the order of the picture signal read from the storing means.

The picture signal can be read and displayed in reverse in time at thinning out the data at every field or at every frame and at writing of the picture signal to the storing means and a selected typical picture can be displayed at every field or at every frame.

### BRIEF DESCRIPTION OF THE DRAWINGS

FIG. 1 is a block diagram of a sub- picture control system in a television receiver for a multipicture display in accordance with a first exemplary embodiment of the present invention.

FIG. 2 illustrates how to store information in a field memory in FIG. 1.

FIG. 2(a) is a case of the prior art.

FIG. 2(b) is a case in which only either one of a pair of fields is used (in the present invention).

FIG. 3 illustrates a display on a television receiver for a multipicture display in accordance with a first exemplary embodiment of the present invention.

FIG. 4 illustrates how to store information in a field memory of a sub- picture control system of a television receiver for a multipicture display in accordance with a second exemplary embodiment of the present invention.

FIG. 5 illustrates a display on a television receiver for a multipicture display in accordance with a second exemplary embodiment of the present invention.

FIG. 6 illustrates a display on a television receiver for a multipicture display in accordance with a third exemplary embodiment of the present invention.

### DETAILED DESCRIPTION OF THE INVENTION

### (First exemplary embodiment)

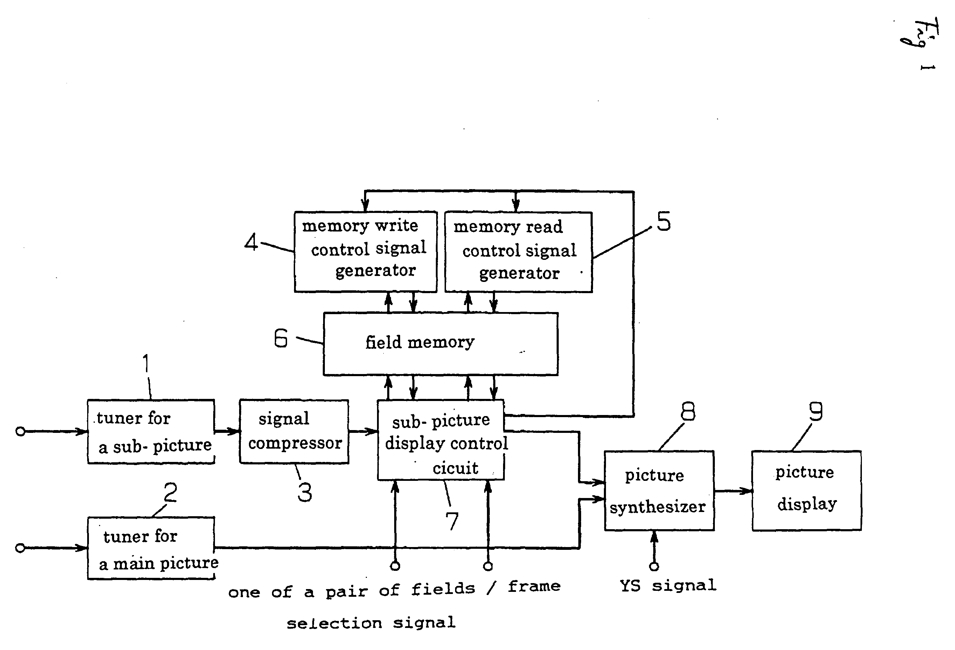

A television receiver having a multipicture display function in accordance with a first exemplary embodiment of the present invention is explained below, referring to FIGs. 1, 2 and 3.

In FIG. 1, the block 1 is a receiver for a sub- picture selection (tuner for a sub- picture, thereafter) for receiving television broadcast signal and selecting a channel for a sub- picture. The block 2 is a receiver for a main picture selection(tuner for a main picture, thereafter) for receiving television broadcast signal and selecting a channel for a main picture. The block 3 is a signal compressor for compressing the received signal in horizontal and vertical directions according to a picture size. The block 7 is a sub- picture display control circuit for receiving the picture signal compressed at signal compressor 3, compensating a picture quality, selecting either one of a field display or a frame display and controlling a memory write control signal generator 4 or a memory read control signal generator 5.

The block 6 is a field memory for storing a compressed picture signal for a sub- picture supplied from sub- picture display control circuit 7. The block 4 is a memory write control signal generator for outputting a write reset signal and a write address signal to field memory 6 in order to set a data writing position in field memory 6. The block 5 is a memory read control signal generator for outputting a read reset signal and a read address signal to field memory 6 in order to set a data reading position of the picture signal from field memory 6. The block 8 is a picture synthesizer for synthesizing a sub- picture compressed signal supplied from sub- picture display control circuit and a main picture signal supplied from tuner for a main picture 2. The block 9 is a picture display such as a television monitor for displaying synthesized picture data supplied from picture synthesizer 8.

The function of a television receiver in accordance with the first exemplary embodiment of the present invention is explained below, referring to the drawings. At a strobe display of a sub- picture on a multipicture television receiver, when a sub- picture is. displayed using only one field of a pair of fields, a control signal is supplied to a sub- picture display control circuit 7. In this case, as many pictures as possible are written in field memory 6. A sub- picture signal selected and received at tuner for a sub-picture 1 is compressed into a sub- picture size set at signal compressor 3 and signals indicating that it is a one-field-display are sent to memory write control signal generator 4 and memory read control signal generator 5. Infield memory 6, every one field is written in the writing position set by a field memory write control signal supplied from memory write control signal generator 4, time sharing only one field of a pair of fields of a compressed picture signal supplied from signal compressor 3. The picture signal written in field memory 6 is stored over whole area of field memory 6, without being separated into an odd field and an even field inside field memory 6. How to the information is stored in field memory 6 is illustrate in FIG. 2(b).

In the memory use of the prior art illustrated in FIG. 2(b), picture signals of both field, that is a picture signal A to D (of odd field or even field) and the other picture signal A' to D' (of the other field of a pair of fields) are written in field memory 6 even when only one field is displayed and a picture signal A to D or the other picture signal A' to D' is selected when the picture signal is read from field memory 6 and the picture is displayed by using only one field of a pair of fields.

In the present invention, however, picture signals E to H of the same field as picture signals A to D can be written by writing only one field in the whole area of field memory 6, as shown in FIG. 2(b) and as a result, an effective picture signal as long as twice time of the prior art can be stored.

The picture signal is read at every fixed time from the position set by field memory read control signal generator 5 and is supplied to sub- picture display control circuit 7. The sub- picture signal from sub- picture display control circuit 7 and the main picture signal from tuner for a main picture 2 are synthesized at picture synthesizer 8 for main and sub- pictures and supplied to a picture display 9. If the signal is strobe displayed on the television receiver, it displays as twice pictures as those of the prior art.

Thus, when a picture is displayed by a field display by selecting how to use a memory, a frame display or a field display, the number of fields of a displayable picture signal can be increased by writing a picture signal of only one field of a pair of fields in the whole area of a field memory.

In the above explanation, a frame display or a field display can be selected by applying a control signal from the outside to sub- picture display control circuit 7 or a selecting condition can previously be set in sub- picture display control circuit 7.

### (Second exemplary embodiment)

A television receiver having a multipicture display function in accordance with a second exemplary embodiment of the present invention is explained below, referring to FIGs. 1, 4 and 5.

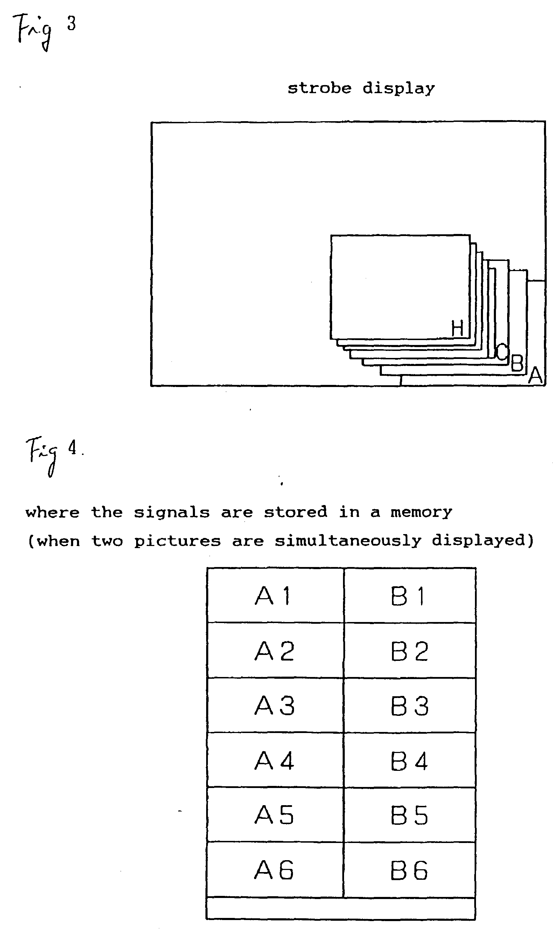

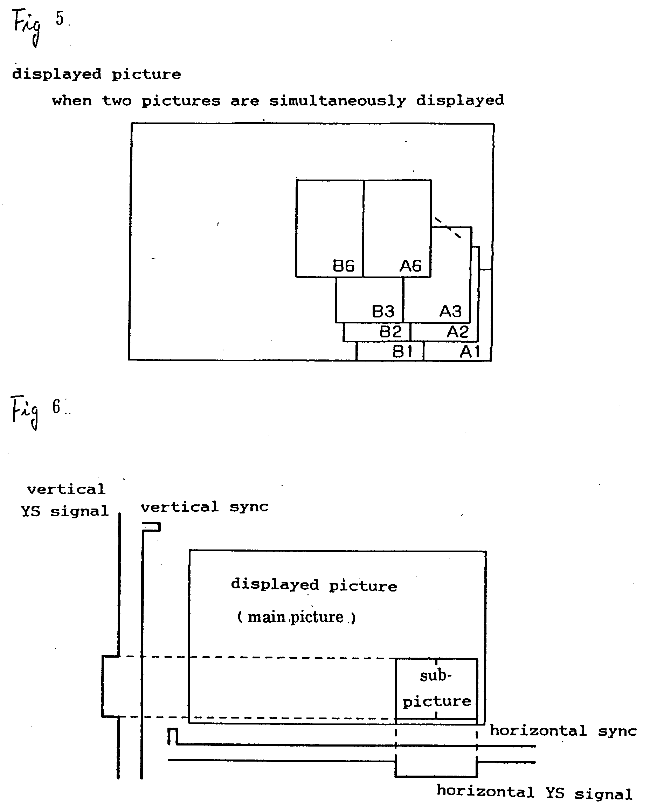

FIG. 4 illustrates a state in which picture signals of two programs (program A and program B) are written in adjacent positions in a field memory 6 for a sub- picture display when two programs are simultaneously displayed. FIG. 5 illustrates a displayed picture when two programs are simultaneously displayed on a screen by a strobe display.

The function of a television receiver having a multipicture display function of the second exemplary embodiment is explained below. When pictures of two programs are simultaneously displayed by a strobe display for a sub- picture display of a multipicture television, two programs are selected and received in order at a tuner for a sub- picture 1 shown in FIG. 1. Each received picture signal is compressed at a signal compressor 3, supplied to a sub- picture display control circuit 7 and the compressed picture signal supplied from sub- picture display control circuit 7 is stored in field memory 6. A control signal is sent from sub- picture display control circuit 7 so as to set the writing position at a memory write control signal generator 4. How to store information in field memory 6 is illustrated in FIG. 4. The signals of program A and program B are written in adjacent blocks, one field by one field.

Picture signals of program A and program B can be simultaneously read as one sub- picture by setting a read timing at a memory read control signal generator 5 so as to make adjacent blocks in field memory 6 a strobe display and consequently, pictures of program A and program B can be simultaneously displayed on a screen by a strobe display as shown in FIG. 5.

More than two programs can be simultaneously displayed on a screen by a strobe display as a sub- picture.

It is also possible to set a read control of a program stored in field memory 6 in arbitrary blocks other than the adjacent blocks. In this case, by applying the control signal to sub- picture display control circuit 7, a picture with various combinations of the programs stored in field memory 6 can be displayed on a screen by a strobe display.

### (Third exemplary embodiment)

A television receiver having a multipicture display function in accordance with a third exemplary embodiment of the present invention is explained below, referring to FIGs. 1 and 6.

FIG. 6 illustrates a sub- picture displayed on a main picture together with horizontal and vertical sync signals of the main picture and horizontal and vertical YS signals specifying a display area of the sub-picture.

A changeover from a simultaneous display of sub- pictures of two programs to a single display of a sub- picture of one program is explained below. As shown in FIG. 6, starting positions and widths of the horizontal and vertical YS signals indicating a display area are set by counting positions from the horizontal and vertical sync signals by a clock signal synchronized with the horizontal and vertical sync signals of the main picture. A YS signal specifying a display area of a sub- picture is supplied to a picture synthesizer 8 shown in FIG. 1 and a display area of a sub- picture is specified for the main picture.

When two sub- pictures of two programs are displayed in adjacent two positions, the positions of the sub- pictures are controlled by a YS signal having a horizontal width of two pictures and after changing the sub- picture display to a one-program-display, if a YS signal having a horizontal width of one picture is supplied to picture synthesizer 8, the two-program-display can easily be changed to a one-program-display. The YS signal can be a signal supplied from an outside to picture synthesizer 8 or a signal which is calculated at sub- picture display control circuit 7 so as to be able to automatically display on an optimum position and the calculated result is supplied to picture synthesizer 8 and controlled at picture synthesizer 8.

It can be done also for plural pictures more than two pictures and also for a plurality of pictures in vertically adjacent positions, the number of display pictures can be changed by varying the horizontal or vertical size of a YS signal which specifies a sub- picture position and is supplied to picture synthesizer 8 of a main picture and sub- pictures.

Thus, changing of the number of sub- pictures on a main picture can be realized by varying the horizontal or vertical size of a YS signal which specifies a sub- picture position and is supplied to picture synthesizer 8 of a main picture and sub- pictures.

### (Fourth exemplary embodiment)

A television receiver having a multipicture display function in accordance with a fourth exemplary embodiment of the present invention is explained below, referring to FIG. 1.

In FIG. 1, a picture signal for a sub- picture selected and received at a tuner for a sub- picture 1 is compressed at a signal compressor 3 and is sent to a sub- picture display control circuit 7. Being applied a signal supplied from sub- picture display control circuit 7, a memory write control signal generator 4 controls so as to write a picture signal in a specified write position of a field memory 6. The picture signal is read from a special position of field memory 6 specified at a memory read control signal generator 5. In this case, when the written picture signal is read in a reverse direction in time, if a signal to control to read in reverse order of writing the picture signal in field memory 6 is supplied from sub- picture display control circuit 7 to memory read control signal generator 5, the programs can be read from memory read control signal generator 5 in reverse order of writing in field memory 6.

Thus, the sub- pictures simultaneously displaying two programs can be displayed in reverse order of reading by controlling the read order of field memory 6 at memory read control signal generator 5.

If the writing and reading positions in field memory 6 are specified to only one picture of an arbitrary picture signal, the picture can be displayed on a screen as one sub- picture, reading only one picture from the stored pictures in field memory 6.

Thus, according to a sub- picture display control circuit of the present invention, an effective quantity of picture signals stored in the field memory at a field display increases by specifying the writing position and the reading position in a field memory for a sub- picture control and a plurality of pictures can be simultaneously displayed and by a strobe display or a reverse order display in time and the number of displayed pictures can be changed.

The invention may be embodied in other specific form without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

### NOTATIONS:

- 1: tuner for a sub- picture
- 2: tuner for a main picture
- 3: signal compressor
- 4: memory write control signal generator
- 5: memory read control signal generator
- 6: field memory
- 7: sub- picture display control circuit
- 8: picture synthesizer
- 9: picture display

## Claims

1. A television receiver for multipicture display comprising:
means for arbitrarily and independently setting or selecting a writing position and a reading position of storing means to store a sub- picture signal; and
means for selecting writing a picture signal to store in said storing means at every frame or at every one of a pair of fields.

2. A television receiver for multipicture display includes:
receiving means for selecting and receiving a sub- picture signal;
data compression means for compressing said sub- picture signal;
storing means for storing the compressed signal output from said storing means, designating a writing position and a reading position;
writing control means for designating a writing position of the compressed picture signal to said storing means;
reading control means for designating a reading position of the compressed picture signal read from said storing means; and
synthesis means for synthesizing the compressed picture signal read from said storing means and a main picture signal.

3. A television receiver for multipicture display; wherein
sub- picture signals of a plurality of programs are selected and received in order, compressed in a vertical or a horizontal direction and stored in adjacent positions in storing means, reading positions of said storing means is designated for the plurality of programs and the plurality of picture signals are simultaneously read.

4. A television receiver for multipicture display includes:
receiving means for selecting and receiving sub- picture signals of a plurality of programs;
signal compression means for compressing the sub- picture signals received at said receiving means;
storing means for storing the compressed picture signals output from said signal compression means, designating writing positions and reading positions;
writing control means for designating writing positions of the compressed picture signals to said storing means;
reading control means for designating reading positions of the compressed picture signals read from said storing means; and
synthesis means for synthesizing the compressed picture signals read from said storing means and a main picture signal;
wherein said storing means stores the compressed signals of a plurality of sub- pictures, designating adjacent positions and the picture signals of the plurality of adjacent programs are simultaneously read and are displayed in adjacent positions as sub- pictures.

5. A television receiver for multipicture display includes:
receiving means for selecting and receiving a sub- picture signal;
signal compression means for compressing said sub- picture signal;
storing means for storing the compressed picture signal output from said signal compression means, designating a writing position and a reading position;
writing control means for designating a writing position of the compressed picture signal to said storing means;
reading control means for designating a reading position of the compressed picture signal read from said storing means; and
synthesis means for synthesizing the compressed picture signal read from said storing means and a main picture signal;
wherein said reading control means can change the order of the picture signals read from said storing means.
